# EUROPEAN PATENT APPLICATION

(11) **EP 3 073 465 A1**
(43) Date of publication of application: **28.09.2016**
(21) Application number: 15160700.9
(22) Date of filing: 25.03.2015
(51) Int. Cl.: G08G 1/16, G08G 1/00

(54) **Animal detection system for a vehicle**

(71) Applicant: Application Solutions (Electronics and Vision) Limited, Lewes, East Sussex BN7 2 AQ (GB)
(72) Inventor: Aubert, Louis-Marie, Redhill, RH1 4AJ (GB); Flanagan, Paul, Brighton, BN1 7FL (GB); Guerreiro, Rui, Brighton, BN1 5PP (GB); Lawson, Clifford, Finchingfield, CM7 4JU (GB); Panakos, Andreas, Hove, BN3 3YU (GB); Powell, John, Hailsham, BN27 3GE (GB); Silva, Carlos, Eastbourne, BN21 1EL (GB); Wingfield, Greg, Horsham, RH13 5JY (GB)
(74) Representative: Büchner, Jörg

(57) **Abstract**

In an embodiment, an animal detection system (11) includes a surround view system (12), a location determination system (13) and a processing module (14). The processing module (14) is configured to receive data from the surround view system (12) and receive data regarding the location of the vehicle (10) from the location determination system (13). The processing module (14) is configured to determine if the location of the vehicle (10) is within an animal zone, and if the location of the vehicle (10) is within an animal zone, to process data received from the surround view system (12). If the data from the surround view system (12) indicates the presence of an animal, the processing module (14) activates an alert (19).

## Description

The present invention relates to an animal detection system for a vehicle.

Seeing animals, such as wild animals, on the road and taking avoiding action has traditionally been an entirely manual action. It has relied on the driver spotting the animal and taking appropriate action to try and avoid a collision with the animal, for example by braking, since the movement of the animal cannot be accurately predicted. Consequently, avoiding a collision with the animal may be dependent on the driver's braking response time which may not be quick enough to avoid a collision with the animal.

DE 10 2004 050 597 A1 discloses a warning system for assisting the driver to avoid collisions with wild animals. The warning system includes sensor systems for detecting the presence of wild animals.

However, more efficient methods and systems for determining the presence of a wild animal and issuing a warning to the driver are desirable.

It is, therefore, an object to provide a system and method for more efficiently determining the presence of an animal in the vicinity of a moving vehicle.

According to the invention, an animal detection system for a vehicle comprises a surround view system, a location determination system and a processing module. The processing module is configured to receive data from the surround view system, receive data regarding the location of the vehicle from the location determination system, determine if the location of the vehicle is within an animal zone and, if the location of the vehicle is within an animal zone, to process data received from the surround view system and to determine if the data from the surround view system indicates the presence of an animal. If the data from the surround view system indicates the presence of an animal, the processing module is configured to activate an alert.

The processing module is, therefore, configured to process data received from the surround view system and analyse the data to determine whether the presence of an animal is indicated, only in the event that the vehicle is located within an animal zone. If the vehicle is located outside of an animal zone, the data from the surround view system is not analysed. Outside of animal zones, the surround view system may be switched off so that it does not collect any data.

The system provides a more efficient method of detecting an animal in the vicinity of a moving vehicle, since data from the surround view system is only received and analysed in the event that the probability of detecting an animal is increased, i.e. when the vehicle is located within an animal zone. Consequently, processing resources are used efficiently, since processing resources are not used for animal detection in situations in which the vehicle is unlikely to be in the vicinity of wild animal, for example when vehicle is located within a town, city or other built-up area.

An animal zone is defined as an area in which there is an increased likelihood of an animal crossing the path of the vehicle.

In some embodiments, the animal detection system may be activated only if the vehicle is moving within an animal zone. Movement of the vehicle may be determined by receiving data indicative of the speed of the vehicle. A threshold may be set so that the animal detection system is activated only if the vehicle is travelling at a speed above the threshold value, for example above 10 km/h.

In some embodiments, data may be received from only some of the image capture devices or other sensors located on the vehicle. In these embodiments, the direction of travel and path of the vehicle may be taken into consideration to determine the area in the vicinity of the vehicle in which the presence of an animal should be detected. For example, if the vehicle is travelling forwards, data from areas to the rear of the vehicle may be not be collected as the vehicle is unlikely to collide with an animal present at the rear of the vehicle.

A surround view is a composite view composed from the images captured by two or more image capture devices. Several image capture devices, for example four or six, may be provided on the vehicle. The images from each of the image capture devices may be combined to provide a surround view such as a 360° image in the form of a top view, also denoted as a bird's eye view, or a panoramic view. The images from adjacent cameras, for example a front camera and a side camera, may overlap with one another in order to provide an uninterrupted 360° surround view. Image processing means for processing the images captured from the plurality of image capture devices and an image display means for displaying the surround view may also be provided. The image processing means and image display means may form part of the surround view system. In some embodiments, the animal detection system includes the image processing means and the image display means.

The animal detection system, in particular, the processing module, may form part of a further driver assistance system or systems within the vehicle such as a parking assistance system or a pedestrian detection system.

In some embodiments, the animal detection system may use some or all of the components of a pedestrian determination system. The pedestrian determination system may be activated only if it is determined that the vehicle is located within an area in which pedestrians are likely to be present, for example when the vehicle is located within a town, city or other built-up area. In these areas, animals are unlikely to be present.

The data regarding the location of the vehicle may be provided by a GPS signal, a GPRS signal or by device using the Galileo system. The data may be received from a device within the vehicle, for example a navigation system, or from a device which may be coupled to the animal detection system, for example from a smart phone.

The processing module may be configured to determine if the location of the vehicle is within an animal zone by comparing the location of the vehicle with locations of known animal zones. For example, the locations of known animal zones may be stored within a lookup table.

In some embodiments, the processing module is configured to determine that the location of the vehicle is within an animal zone by receiving data indicative of a traffic sign indicating an animal zone. Traffic signs are often situated next to roads at positions in which animals have been observed to be frequently on the road. Examples of these types of traffic signs are a traffic sign including a picture of the wild animal, such as a deer, or a kangaroo. In this embodiment, the surround view system or another image capture device may be used to determine the presence of traffic signs and to determine the shape and/or colour and/or image on the traffic sign in order to determine that the traffic sign indicates the start or end of an animal zone.

In some embodiments, the processing module is further configured to continue to determine if the location of the vehicle is with within an animal zone and, if it is determined that the location of the vehicle is no longer in an animal zone, to stop processing data from the surround view system and to stop determining if the data from the surround view system indicates the presence of an animal. Therefore, the data indicative of the location of the vehicle is received and analysed whilst the animal detection system is activated and whilst the processing module is receiving and processing data from the surround view system to determine if an animal may be present in the captured images.

Once the vehicle has exited the animal zone, the probability that the vehicle that an animal is be present in the vicinity of the vehicle is reduced. Therefore, processing resources can be saved by no longer processing the data from the surround view system and no longer determining if the data from the surround view system indicate the presence of an animal.

The animal detection system may be switched on as the vehicle enters an animal zone and switched off when the vehicle exits the animal zone.

In an embodiment, the surround view system includes a plurality of image capture devices. The image capture device may include a lens, such as a wide field of view lens, in order that the camera can capture an image from a wider area. In some embodiments, the lens is a fisheye lens and may be either a 180° fisheye lens, in which the diagonal of the image captures 180°, or may be a circular fisheye lens in which the lens captures a 180° image vertically, horizontally and diagonally. In an embodiment, the fisheye lens captures a 190° image horizontally and 190° diagonally and less than 190° vertically.

The image capture device may be a video camera and may be digital or analogue. The image capture device may capture a number of frames per second, for example around 35 frames per second, to provide a near real-time image of the environment in the vicinity of the vehicle.

A number of successive images may be captured by one or more of the image capture devices and analysed to determine if an object is present in the image which may be an animal. The presence of an animal may be determined by the motion of an object relative to the background, for example.

The animal detection system may also include one or more additional sensors, for example one or more infrared or thermal cameras. An infrared or thermal camera may assist in the detection of the presence of an animal in darkness.

The processing module may be configured to activate the alert by activating a visual signal and/or audible warning and or braking system and/or steering system. Consequently, the alert may be purely passive, in the form of a visual and/or audible signal to alert the driver that an animal may be present in the vicinity of the vehicle and enable the driver to take action manually, if required. Alternatively, or in addition, the alert may include an active system in which case the braking system and/or steering system may be activated without action by the driver to avoid a collision with an animal crossing the path of the vehicle.

A method of detecting the presence of an animal in the path of a vehicle is provided which comprises receiving data from a plurality of sensors including image capture devices of the surround view system, receiving data indicative of the location of the vehicle, determining whether the location of the vehicle is in within an animal zone, if the location of the vehicle is within an animal zone, analysing the data from the sensors to determine if an animal is present and upon determination of the presence of an animal, activating an alert.

The determining that the location of the vehicle is within the animal zone may comprise comparing the location of the vehicle with locations of known animal zones and/or receiving data indicative of a traffic sign indicating an animal zone.

The method may further comprise continuing to determine if the location of the vehicles which is within an animal zone and, if it is determined that the vehicle is no longer in an animal zone, stopping processing data from the surround view system and stopping determining if the data from the surround view system indicates the presence of an animal.

The method may be enabled when the vehicle is in an area where there is a likelihood of animals crossing the path of the vehicle. In some embodiments, GPS data is used to determine the location of the vehicle. Geographical data may be used to determine whether this location is an area of significant animal presence, i.e. an animal zone. When the presence of an animal is detected in the images captured by the surround view system or other sensors, a warning signal may be provided to the driver and/or a braking control mechanism activated to avoid the potential collision.

A vehicle comprising the animal detection system according to one of the embodiments described above is also provided.

A program product comprising computer program code tangibly embodied thereon that when executed on a processor causes the processor to perform the method of one of the embodiments described above is also provided.

Embodiments will now be described with reference to the drawings.
- Figure 1: illustrates a schematic view of a vehicle including an animal detection system, and
- Figure 2: illustrates a flow chart of a method for detecting an animal.

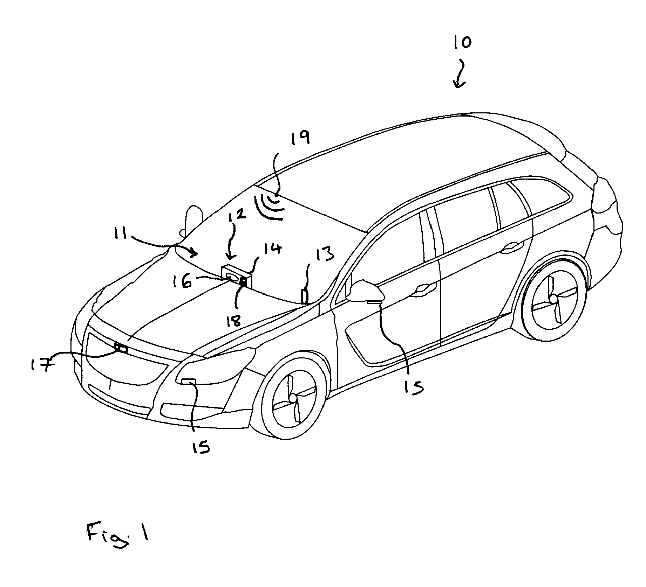

Figure 1 is a schematic view of a vehicle 10 having an animal detection system 11. The animal detection system 11 includes a surround view system 12, a location determination system 13, and a processing module 14. The animal detection system 11 and method may be used to detect any animal or wildlife, in particular an animal which is of sufficient size to cause damage to the body work of the vehicle in a collision with the vehicle 10.

The processing module 14 is configured to receive data from the surround view system 12 and receive data regarding the location of the vehicle 10 from the location determination system 13. The processing module 14 is configured to determine if the location of the vehicle 10 is within an animal zone, and if the location of the vehicle 10 is within an animal zone, to process data received from the surround view system 12. If the data from the surround view system 12 indicates the presence of an animal, the processing module 14 activates an alert 19.

The surround view system 12 includes several image capture devices 15, for example four or six, which are provided on the vehicle. The images from each of the image capture devices 15 may be combined by image processing means 16 to provide a surround view such as a 360° image in the form of a top view also denoted as a bird's eye view, or a panoramic view. The images from adjacent cameras, for example a front camera and a side camera, may overlap with one another in order to provide an uninterrupted 360° surround view.

The presence of an animal may be detected by analysis of the images captured by the surround view system 12, for example by determining the presence of an object which is moving relative to other objects detected in the image. A moving object, such as an animal, may be distinguished from stationary objects such as a tree.

The number of times an animal is detected is subsequent frames within a specified time period may recorded by the processor to provide a confidence level. If an animal is detected, the processing module compares the confidence level with a predetermined threshold level. If the threshold level exceeds the confidence level a driver alert is activated.

Further sensors 17 may be provided which coupled with, or form part of, other existing systems of the vehicle as well as the animal detection system 11. One or more of the sensors 17 may include an infrared and/or thermal camera. An infrared or thermal camera may be used to increase the chance of detecting an animal during the night. A radar or Lidar system may also be used to detect the presence of an animal.

The processing module 14 may be coupled to one or further systems of the vehicle 10, such as the surround view system 12 or one or more further driver assistance systems or a separate processing module dedicated to the animal detection system 11 may be used.

In order to determine if the vehicle is in an animal zone, the processing module 14 may receive GPS information regarding the location of the vehicle. The processing module 14 may include memory or be coupled to memory storing information about the location of animal zones, for example, geographical data stored in a lookup table. The geographical data may show if the location is a wooded area or is countryside, if there are hotspots with respect to vehicle collisions with animals.

The animal detection system 11 is switched on as the vehicle 10 enters an animal zone and is switched off as the vehicle 10 exits an animal zone. This assists in reducing the processing resources required, since the system is active only when there is an increased likelihood of detecting an animal.

The animal detection system 11 may also be activated and deactivated depending on the speed of the vehicle 10. For example, the animal detection system 11 may be activated only if the vehicle 10 is moving with a speed above a threshold value. If the vehicle 10 is stationary or moving slowly, collision with an animal is unlikely, even if the vehicle is within an animal zone.

The driver may also switch off the animal detection system 11 manually. He may wish to do this if for example the vehicle 10 is parked in a car park within the animal zone. In this instance there is little danger of the moving vehicle 10 hitting an animal.

The alert 19 may be activated in various ways, for example a visual or audio signal may be activated. A display device for displaying a warning of the presence of an animal may be located on the instrument panel of the vehicle. The display may form part of the surround view system and infotainment system. The warning display may be a warning light. Alternatively the display may take the form of text or graphics. An audible warning may alternatively or additionally be provided to alert the driver.

In some embodiments, the animal detection system 11 is an active system in that it activates automatic control of the vehicle 10, for example braking and/or steering system to alter the path of the vehicle 10 to try to avoid collision with the animal.

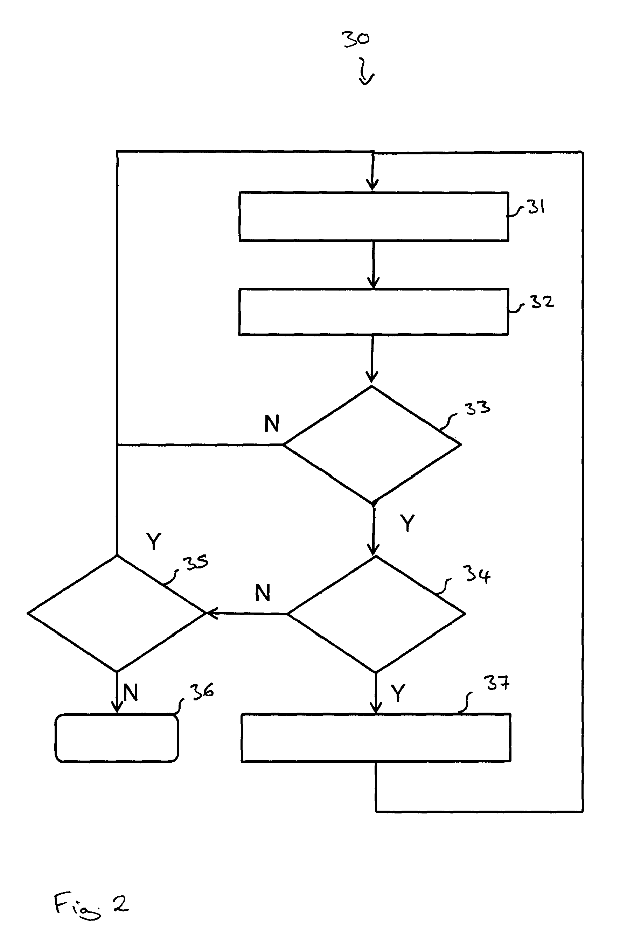

Figure 2 is a flow chart 30 describing the steps of the method for operating the detection system.

In box 31, data is received from a plurality of sensors including image capture devices of a surround view system. In box 32, data indicative of the location of the vehicle is received, for example GPS data. In decision diamond 33, it is determined whether the location of the vehicle is within an animal zone. If the vehicle is not within an animal zone, the method continues to box 31. If it is determined that the present location of the vehicle is within an animal zone, the method proceeds to decision diamond 34 and the data from the sensors is analysed to determine if an animal is present. If it is determined in decision diamond 34 that an animal is present, an alert is activated in box 37. If no animal is detected, the method may return to box 31.

In some embodiments, if no animal is detected, the method proceeds to decision diamond 35, to determine if the vehicle is still within an animal zone. If it is determined that the vehicle is no longer in an animal zone, the method stops in box 36 and data from the surround view system is no longer captured and analysis of data from the surround view system is stopped to save processing resources.

Computer program code 18 which when executed on a processor causes the processor to perform the method according to one of the embodiments described herein may be tangibly embodied in a program product. The program product may be a data carrier, such as an optical drive, hard disk, flash memory etc. This embodiment may be useful if the computer program is to upgrade or enhance an existing system.

The computer program code 18 may also be stored in memory in a device or a system for image capturing and/or image processing or a device or system coupled to one or more driver assistance systems. This embodiment may be used if a device and system is provided for installation in a vehicle.

## Claims

1. An animal detection system (11) for a vehicle (10), comprising:
a surround view system (12);
a location determination system (13), and
a processing module (14),
**characterised in that** the processing module (14) is configured to:
receive data from the surround view system (12);
receive data regarding the location of the vehicle from the location determination system (13);
determine if the location of the vehicle (10) is within an animal zone, and if the location of the vehicle (10) is within an animal zone, to process data received from the surround view system (12),
determine if the data from the surround view system (12) indicates the presence of an animal, and if the data from the surround view system (12) indicates the presence of an animal,
activate an alert (19).

2. The system (11) according to claim 1, **characterised in that** the data regarding the location of the vehicle (10) is provided by a GPS signal or a GPRS signal or a device using the Galileo system.

3. The system (11) according to claim 1 or claim 2, **characterised in that** the processing module (14) is configured to determine if the location of the vehicle (10) is within an animal zone by comparing the location of the vehicle (10) with the locations of known animal zones.

4. The system (11) according to one of claims 1 to 3, **characterised in that** the processing module (14) is configured to determine that the location of the vehicle (10) is within an animal zone by receiving data indicative of a traffic sign indicating an animal zone.

5. The system (11) according to one of claims 1 to 4, **characterised in that** the processing module (14) is further configured to continue to determine if the location of the vehicle (10) is within an animal zone and, if it is determined that the location of the vehicle (10) is no longer in an animal zone, to stop processing data from the surround view system (12) and to stop determining if the data from the surround view system (12) indicates the presence of an animal.

6. The system (11) according to one of claims 1 to 5, **characterised in that** the surround view system (12) includes a plurality of image capture devices.

7. The system (11) according to one of claims 1 to 6, further comprising one or more additional sensors (17).

8. The system (11) according to claim 7, **characterised in that** the one or more sensors (17) comprise an infrared or a thermal camera.

9. The system (11) according to one of claims 1 to 8, **characterised in that** the processing module (14) is configured to activate the alert (19) by activating a visual signal and/or activating an audible warning and/or activating a braking system and/or activating a steering system.

10. A method of detecting the presence of an animal in the path of a vehicle (10), comprising:
receiving data from a plurality of sensors (17) including image capture devices (15) of a surround view system (12);
receiving data indicative of the location of the vehicle (10) ;
determining whether the location of the vehicle is within an animal zone,
if the location of the vehicle (10) is within an animal zone, analysing the data from the sensors (15, 17) to determine if an animal is present, and
upon determination of the presence of an animal, activating an alert (19).

11. The method according to claim 10, **characterised in that** the determining that the location of the vehicle (10) is within the animal zone comprises comparing the location of the vehicle (10) with the locations of known animal zones.

12. The method according to claim 10 or claim 11, **characterised in that** the determining that the location of the vehicle (10) is within an animal zone comprises receiving data indicative of a traffic sign indicating an animal zone.

13. The method according to one of claims 10 to 12, further comprising, continuing to determine if the location of the vehicle (10) is within an animal zone, and, if it is determined that the vehicle (10) is no longer in an animal zone, stopping processing data from the surround view system (12) and stopping determining if the data from the surround view system (12) indicates the presence of an animal.

14. A vehicle (10) comprising the animal detection system according to one of claims 1 to 9.

15. A program product, comprising computer program code (18) tangibly embodied thereon that when executed on a processor, causes the processor to perform the method of one of claims 10 to 13.
